# EUROPEAN PATENT APPLICATION

(11) **EP 4 632 868 A2**
(43) Date of publication of application: **15.10.2025**
(21) Application number: 25169076.4
(22) Date of filing: 08.04.2025
(51) Int. Cl.: H01M 10/0587, H01M 50/105, H01M 50/586

(54) **RECHARGEABLE BATTERY AND MANUFACTURING METHOD THEREOF**

(30) Priority: 09.04.2024 KR 20240048274
(71) Applicant: SAMSUNG SDI CO., LTD., Yongin-si, Gyeonggi-do 17084 (KR)
(72) Inventor: Kim, Donghyun, Yongin-si, Gyeonggi-do 17084 (KR); Lee, Wonjin, Yongin-si, Gyeonggi-do 17084 (KR); Seo, Yejin, Yongin-si, Gyeonggi-do 17084 (KR); Moon, Eunjeong, Yongin-si, Gyeonggi-do 17084 (KR)
(74) Representative: Gulde & Partner

(57) **Abstract**

A rechargeable battery includes an electrode assembly, a pouch configured to accommodate the electrode assembly together with an electrolyte, and an adhesive layer configured to connect between the electrode assembly and the pouch, and the adhesive layer is in contact with an inner wall of the pouch.

## Description

### BACKGROUND OF THE INVENTION

### (a) Field of the Invention

Examples of the present disclosure relate to a rechargeable battery and a manufacturing method thereof.

### (b) Description of the Related Art

A rechargeable battery is a power storage system that converts electrical energy into chemical energy to store the chemical energy with desired, advantageous or improved energy density. Unlike a primary battery that typically cannot be recharged, since the rechargeable battery can be recharged, rechargeable batteries are widely used in information technology (IT) devices such as, e.g., a smartphone, a laptop computer, a tablet computer, and the like.

The rechargeable batteries are being developed in various forms depending on the product in which they are used, and, e.g., prismatic batteries maintaining a certain shape, or pouch-type batteries made of or including flexible materials, are being developed depending on the type of case.

A pouch-type battery has an electrode assembly sealed within an exterior material made of or including a flexible laminate material, and compared to a prismatic battery, the shape of the case can readily be deformed by external pressure or impact.

Deformation or impact of such case may cause deformation or movement of the separator of the electrode assembly, which may short-circuit the anode and cathode, increasing the possibility of ignition.

### SUMMARY OF THE INVENTION

The invention is defined by the appended claims. The description that follows is subjected to this limitation. Any disclosure lying outside the scope of said claims is only intended for illustrative as well as comparative purposes. Examples of the present disclosure include a rechargeable battery, and a manufacturing method thereof, capable of reducing the possibility of a short circuit and ignition due to deformation of the case or electrode assembly, even when external pressure or impact is applied.

A technical problem that is also solved by the present disclosure is not limited to the above, and other objects not mentioned herein will be understood from the following description by those skilled in the art.

A rechargeable battery includes an electrode assembly, a pouch configured to accommodate the electrode assembly together with an electrolyte, and an adhesive layer configured to connect between the electrode assembly and the pouch, where the adhesive layer is in contact to an inner surface of a side wall of the pouch.

The adhesive layer may surround an outer side of the electrode assembly.

The adhesive layer may be formed asymmetrically with respect to a virtual horizontal line that bisects a thickness of the electrode assembly.

The adhesive layer may be deformed according to a shape of a gap between the side wall of the pouch and the electrode assembly, thereby filling the gap.

The adhesive layer may be a photocurable adhesive.

The photocurable adhesive may be an acryl-based adhesive.

The electrode assembly may be a wound-type electrode assembly, a separator protrudes outward from a first electrode and a second electrode, and the protruding separator is folded toward a center of the electrode assembly.

The adhesive layer may connect a folded separator of the electrode assembly to the pouch.

A manufacturing method of a rechargeable battery includes preparing a pouch and an electrode assembly, forming an adhesive layer comprising a photocurable adhesive on an inner surface of a side wall of the pouch, disposing the electrode assembly to contact the adhesive layer, curing the adhesive layer with UV light, and sealing the pouch.

In the forming of the adhesive layer, the adhesive layer may be applied at a viscosity of about 740 cPs to about 780 cPs and a nozzle temperature of about 75°C to about 85°C.

In the disposing of the electrode assembly, the adhesive layer may be deformed according to a gap between the electrode assembly and the side wall of the pouch.

The adhesive layer may be deformed by being pressurized by a weight of the electrode assembly.

A manufacturing method of a rechargeable battery may further include, after disposing the electrode assembly, forming an exterior shape of the pouch by pressurizing the pouch by a pressing plate.

The pressing plate may pressurize the pouch at a temperature of about 80°C.

By forming a rechargeable battery as disclosed, the deformation or movement of the separator due to an external impact may not occur or may be reduced, and a rechargeable battery with reduced or minimized possibility of a short circuit and ignition.

### BRIEF DESCRIPTION OF THE DRAWINGS

The accompanying drawings illustrate an example embodiment of the present disclosure and together with the foregoing disclosure, serve to provide further understanding of the technical features of the present disclosure, and thus, the present disclosure is not construed as being limited to the drawing.
FIG. 1 is a schematic exploded perspective view of a rechargeable battery, according to an example embodiment.
FIG. 2 is a drawing showing a pouch, according to an example embodiment.
FIG. 3 is a schematic cross-sectional view of a rechargeable battery, according to an example embodiment.
FIG. 4 is a drawing for explaining a method of folding a separator, according to an example embodiment.
FIG. 5 is a drawing illustrating a manufacturing method of a rechargeable battery, according to an example embodiment.
FIG. 6 an exploded perspective view of an electrode assembly, according to another example embodiment.
FIG. 7 is a schematic cross-sectional view of a rechargeable battery including the electrode assembly of FIG. 6.
FIG. 8 and FIG. 9 are drawings illustrating another manufacturing method of a rechargeable battery, according to an example embodiment.

### DETAILED DESCRIPTION OF THE EXAMPLE EMBODIMENTS

Hereinafter, example embodiments of the present disclosure will be described in detail with reference to the accompanying drawings. Prior to description, it should be understood that terms and words used in the specification and the appended claims should not be construed as having common and dictionary meanings, but should be interpreted as having meanings and concepts corresponding to technical ideas of the present disclosure in view of the principle that the inventor can properly define the concepts of the terms and words in order to describe his/her own invention as best as possible. Accordingly, since the example embodiment described in the specification and the configurations shown in the drawings are merely example embodiment and configurations of the present invention, they do not represent all of the technical ideas of the present invention, and it should be understood that various equivalents and modified examples, which may replace the example embodiments, are possible within the scope of the present application.

It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

In addition, in order to help understanding of the present disclosure, the accompanying drawings are not drawn to scale, and the dimensions of some components may be exaggerated. In addition, the same reference numerals may be assigned to the same elements in different embodiments.

Although the terms "first," "second", and the like are used to describe various elements, these elements are not limited by these terms. These terms are used to distinguish one element from another, and unless stated to the contrary, a first element may be a second element.

Throughout the specification, unless stated otherwise, each element may be singular or plural.

For ease of explanation, a spatial relative term such as "beneath," "below," "lower," "above," "upper," or the like may be used herein in order to describe a relationship between one element or feature and another element(s) or feature(s), as shown in the drawings. Spatial relative position is to be understood to encompass different directions of a device in use or operation in addition to directions shown in the drawings. For example, when the device in the drawing is turned over, an element described as "below" or "bottom" another element may be understood to be "above" or "above" another element. Therefore, the term "below" may encompass both upward and downward directions.

In addition, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The terms used herein are intended to describe the example embodiments of the present disclosure and are not intended to limit the present disclosure.

Hereinafter, a rechargeable battery according to an example embodiment will be described with reference to the accompanying drawings.

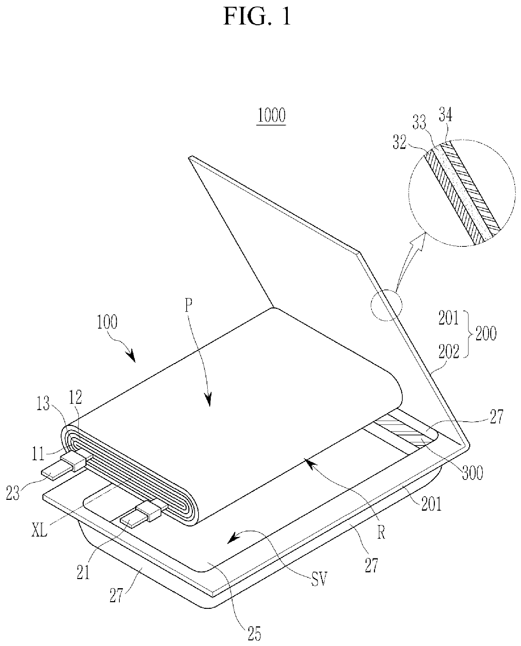

FIG. 1 is a schematic exploded perspective view of a rechargeable battery, according to an example embodiment.

As shown in FIG. 1, a rechargeable battery 1000 according to an example embodiment may include an electrode assembly 100 and a pouch 200.

The electrode assembly 100 may include a first electrode 11, a second electrode 12, and a separator 13 located between the first electrode 11 and the second electrode 12. The separator 13 may be provided for insulation, and the electrode assembly 100 may have a stacked configuration including, in order, the first electrode 11, the separator 13, the second electrode 12 and the separator 13.

The electrode assembly 100 may be in the form of a jelly roll wound around a winding axis XL, with the first electrode 11, the separator 13, the second electrode 12, and the separator 13 being stacked in layers. In examples, the electrode assembly 100 may be flattened by being pressurized after winding, and the cross-section cut along a vertical direction crossing the winding axis XL may have an elliptical shape that is elongated in a first direction.

In examples, the electrode assembly 100 may include a flat portion P, which is relatively flat, and a curved surface portion R, which is relatively round, when viewed in cross-section. The flat portion P is the part of the electrode assembly 100 that is pressurized after being wound, and the curved surface portion R may connect the two opposite flat portions P. In the electrode assembly 100, one rotation may include a pair of opposite flat portions P connected to a pair of curved surface portions R at the end of each flat portion P.

The first electrode 11 may be a positive electrode and may include a strip-shaped substrate with a long length in the first direction, an electrode active portion including a positive active material layer formed on the strip-shaped substrate, and an electrode uncoated portion where no separate layer is formed on the substrate, such that the strip-shaped substrate may be exposed. A first electrode tab 21 configured to draw current to the outside may be connected to the electrode uncoated portion. The electrode uncoated portion may extend in length along the electrode active portion.

The substrate of the first electrode 11 may be or include an aluminum thin film. A compound capable of reversible intercalation and deintercalation of lithium (lithiated intercalation compound) may be used as the positive active material of the first electrode 11. For example, a composite oxide including one or more metals such as, e.g., cobalt, manganese, nickel, or combinations thereof, and lithium may be utilized. The content of the positive electrode active material may be about 90 wt% to about 98 wt% based on the total weight of the positive electrode active material layer.

The positive active material layer may further include a binder and a conductive material. The content of the binder and the conductive material may be about 1 wt% to about 5wt%, respectively, based on the total weight of the positive active material layer.

The binder may be configured to ensure or increase the possibility that the positive electrode active material particles sufficiently adhere to each other, and the positive electrode active material sufficiently adheres to the substrate that is or includes the current collector. Representative examples of the binder may be or include at least one of polyvinyl alcohol, carboxymethylcellulose, hydroxypropyl cellulose, diacetyl cellulose, diacetyl cellulose, polyvinyl chloride, carboxylated polyvinyl chloride, polyvinyl fluoride, polymer including ethylene oxide, polyvinylpyrrolidone, polyurethane, polytetrafluoroethylene, polyvinylidene fluoride, polyethylene, polypropylene, styrene butadiene rubber, acrylated styrene butadiene rubber, epoxy resin, nylon, or the like, but are not limited thereto. The conductive material may be used to provide conductivity to the electrode, and in a configured battery, any electrically conductive material may be used as long as the electrically conductive material does not cause chemical change.

The second electrode 12 may be a negative electrode, and may include a strip-shaped substrate with a long length in the first direction, an electrode active portion including a negative active material layer formed on the substrate, and an electrode uncoated portion where no separate layer is formed on the substrate, such that the substrate may be exposed. A second electrode tab 23 configured to draw current to the outside may be connected to the electrode uncoated portion. The electrode uncoated portion may extend along a length of the electrode active portion.

The substrate of the second electrode 12 may be or include a copper thin film. The negative active material of the second electrode 12 may be or include a carbon-based active material. The carbon-based negative active material may be or include artificial graphite or a mixture of artificial graphite and natural graphite. When a crystalline carbon-based material, which is or includes artificial graphite or a mixture of artificial graphite and natural graphite, is used as the negative active material, compared to the case where an amorphous carbon-based active material is used, crystallographic characteristics of particles are more developed, and accordingly, there may be an advantage in further improving the orientation characteristics of carbon materials within the electrode plate with respect to external magnetic fields. The form of the artificial graphite or natural graphite may be amorphous, plate-shaped, flake-shaped, spherical, fibrous, or a combination thereof. In addition, when the artificial graphite and natural graphite are mixedly used, the mixing ratio thereof may be about 70: 30 wt% to about 95: 5 wt%.

In examples, the negative active material layer may further include at least one of a Si-based negative active material, a Sn-based negative active material, or a LiMOx(M=metal)-based material. When the negative active material layer further includes one or more of the above materials, that is, the carbon-based negative active material is included as a first negative active material, and the negative active material is included as a second negative active material, the mixing ratio of the first negative active material to the second negative active material may be about a 50:50 to about a 99:1 weight ratio.

The LiMOx(M =metal)-based negative active material may be a lithium vanadium oxide.

The Si-based negative active material may be or include Si, Si-C composite, SiOₓ (0 < x < 2), Si-Q alloy (the Q is an element that is at least one of alkali metal, alkaline-earth metal, Group 13 element, Group 14 element, Group 15 element, Group 16 element, transition metal, rare earth element, and a combination thereof, and is not Si), and the Sn-based negative active material may be or includes at least one of Sn, SnO₂, Sn-R alloy (the R is an element that is at least one of alkali metal, alkaline-earth metal, Group 13 element, Group 14 element, Group 15 element, Group 16 element, transition metal, rare earth element and a combination thereof, and is not Sn), where at least one of the above elements and SiO₂ may be mixed and used. As the element Q and R, one or more of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof, may be used.

The content of the negative active material in the negative active material layer may be about 95 wt% to about 99 wt% based on a substantially entire weight of the negative active material layer.

The negative active material may include at least one of a binder and a conductive material. The content of the binder in the negative active material may be about 1 wt% to about 5 wt% based on the total weight of the negative active material. In addition, when the conductive material is further included, the negative active material at about 90 wt% to about 98 wt%, the binder at about 1 wt% to about 5 wt%, and the conductive material at about 1 wt% to about 5 wt% may be used.

**The** binder may be configured to ensure that the negative active material particles sufficiently adhere to each other and the negative active material sufficiently adheres to the negative electrode substrate. As the binder, a non-aqueous binder, an aqueous binder, or a combination thereof may be used.

**The** non-aqueous binder may be or include at least polyvinyl chloride, carboxylated polyvinyl chloride, polyvinyl fluoride, polymer including ethylene oxide, polyvinylpyrrolidone, polyurethane, polytetrafluoroethylene, polyvinylidene fluoride, polyethylene, polypropylene, polyamideimide, polyimide, or a combination thereof.

**The** aqueous binder may be or include at least styrene-butadiene rubber, acrylated styrene-butadiene rubber (SBR), acrylonitrile-butadiene rubber, acryl rubber, butyl rubber, ethylene-propylene copolymer, polyepichlorohydrin, polyphosphazene, polyacrylonitrile, polystyrene, ethylene-propylene-diene copolymer, polyvinylpyridine, chlorosulfonated polyethylene, latex, polyester resin, acryl resin, phenol resin, epoxy resin, polyvinyl alcohol, acrylate-based resin, or a combination thereof.

When the aqueous binder is used as the negative electrode binder, a cellulose-based compound capable of providing viscosity may be further included as a thickener. As the cellulose-based compound, one or more of carboxymethyl cellulose, hydroxypropylmethyl cellulose, methyl cellulose, or alkali metal salt thereof may be mixed and used. As the alkali metal, Na, K or Li may be used. The thickener usage content may be about 0.1 parts by weight to about 3 parts by weight based on a negative active material 100 parts by weight.

The conductive material may be used to provide conductivity to the electrode, and in a configured battery, any electrically conductive material may be used as long as the electrically conductive material does not cause chemical change. As an example of the conductive material, a conductive material including a carbon-based material such as at least one of natural graphite, artificial graphite, carbon black, acetylene black, Ketjen black, carbon fiber; a metal powder such as copper, nickel, aluminum, silver, or the like or a metal-based material such as metal fiber or the like; a conductive polymer such as polyphenylene derivative; or a mixture thereof may be used. Meanwhile, the Brunauer Emmett Teller (BET) specific surface area of the negative active material layer may be less than about 3.0m²/g, and may be about 0.6 m²/g to about 1.2 m²/g. When the BET specific surface area of the negative active material layer is less than about 3.0 m²/g, it may provide the advantage of improving the electrochemical lifespan characteristics.

As the BET measurement, after a lithium rechargeable battery including the negative electrode is charged and discharged, the negative electrode obtained by dismantling the battery in the fully discharged state may be cut into a preset size and subsequently placed into a BET sample holder, and the measurement is made in the nitrogen gas adsorption method.

The negative electrode may have a cross-section loading level (L/L) of about 6 mg/cm² to about 65 mg/cm².

As the separator 13, which is a polymer film that allows lithium ions to pass through, polyethylene, polypropylene, polyvinylidene fluoride or a multilayer of two or more thereof may be used, and a mixed multilayer such as a polyethylene/polypropylene two-layer separator, a polyethylene/polypropylene/polyethylene three-layer separator, a polypropylene/polyethylene/polypropylene three-layer separator, or the like may be used.

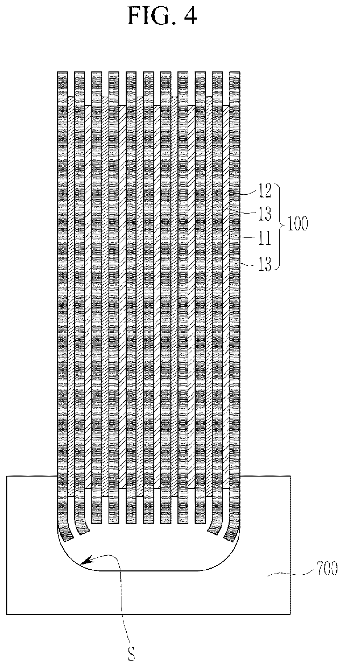

The separator 13 may be larger than the first electrode 11 and the second electrode 12, and may protrude further out than end portions of the first electrode 11 and the second electrode 12. Adjacent separators 13 may be spaced apart (see FIG. 4) depending on the thickness of the first electrode 11 and the second electrode 12.

The separator 13 protruding outside the first electrode and the second electrode may be folded toward the center of the electrode assembly 100.

Meanwhile, the electrode assembly 100 may be contained in the pouch 200 together with an electrolyte.

The electrolyte may include a non-aqueous organic solvent and a lithium salt.

The non-aqueous organic solvent serves as a medium through which ions involved in the electrochemical reaction of the battery can move.

The lithium salt is a substance that dissolves in an organic solvent and acts as a source of lithium ions in the battery, enabling the basic operation of a lithium secondary battery and promoting the movement of lithium ions between the positive electrode and the negative electrode. Representative examples of the lithium salt may include one or more of LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (here, x and y are natural numbers, e.g., integers of 1 to 20), LiCl, Lil and LiB(C₂O₄)₂(lithium bisoxalate borate(lithium bis(oxalato) borate: LiBOB) as the supporting electrolytic salt. In various examples, the concentration of lithium salt be used within the range of about 0.1M to about 2.0M. When the concentration of the lithium salt is included in the above range, the electrolyte has appropriate electrical conductivity and viscosity, and therefore, may represent desired, advantageous or improved electrolyte performance, enabling the lithium ions to move effectively.

The pouch 200 may be formed of or include a laminate exterior material, and may be sealed, e.g., by heat-sealing, an edge of the exterior material, after disposing the electrode assembly 100 between a lower exterior material 201 and an upper exterior material 202.

The laminate exterior materials 201 and 202 may be formed or include, for example, in a multi-layer structure having a first insulation layer 32, a metal layer 33 and a second insulation layer 34. In examples, various other adhesive layers or functional layers may be added.

The first insulation layer 32 may be formed of or include a material having insulating properties and thermally adhesive properties on the inner surface of the laminate exterior material, and can be sealed by, e.g., heat-sealing the edges while the electrode assembly 100 is accommodated. In addition, the first insulation layer 32 may be formed on one side of the metal layer 33 and may form the inner side surface of the laminate exterior material facing the electrode assembly 100. The first insulation layer 32 may be formed of or include cast polypropylene (CPP) or an equivalent thereof, which does not react with the electrolyte.

An adhesive layer 300 may be formed on the inner wall of the pouch 200, and the electrode assembly 100 may be attached and fixed to the adhesive layer 300.

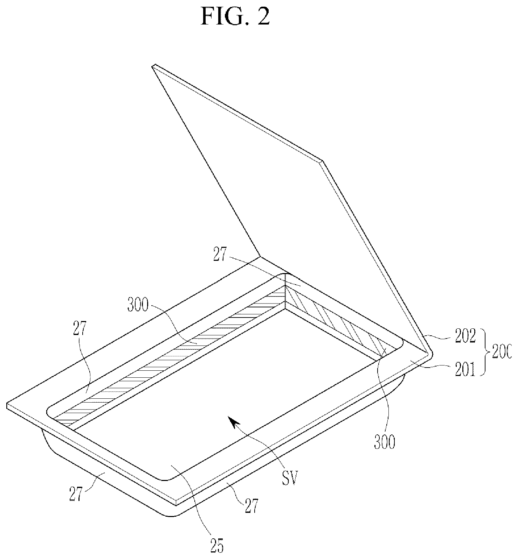

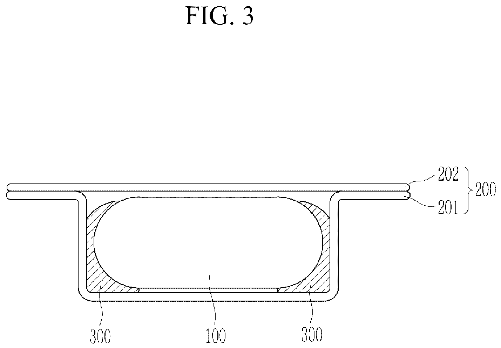

FIG. 2 shows a pouch according to an example embodiment. FIG. 3 is a schematic cross-sectional view of a rechargeable battery according to an example embodiment.

Referring to FIG. 1 to FIG. 3, the pouch 200 may include the lower exterior material 201 and the upper exterior material 202, and the lower exterior material 201 may have an accommodation space SV in which the electrode assembly 100 is accommodated, and the upper exterior material 202 may be a cover configured to cover the accommodation space SV.

Depending on the form of the electrode assembly 100, the accommodation space SV may be formed of or include a bottom portion 25 and four side walls 27 connected to the bottom portion 25 and surrounding the electrode assembly 100. That is, an inner surface of the side wall 27 forming the accommodation space SV may face an outer side of the electrode assembly 100.

The adhesive layer 300 may be formed on three side walls 27 of the four side walls 27 forming the accommodation space SV. In an example, among the outer side of the electrode assembly 100, the adhesive layer 300 may be formed on the side wall 27 facing two curved surface portions R and a portion where the separator is folded at a lower opposite side where the electrode tab is not formed.

The adhesive layer 300 may be formed linearly and continuously along the side wall 27 of the pouch 200, but the adhesive layer 300 is not limited thereto, and may be formed non-continuously. The adhesive layer 300 may formed by a manufacturing method described further below.

The adhesive layer 300 may have a shape that surrounds the outer side of the electrode assembly 100. At this time, the adhesive layer 300 may be formed asymmetrically with respect to a virtual horizontal line that bisects a thickness of the electrode assembly, and may surround an upper portion and a lower portion of the electrode assembly 100, asymmetrically. That is, a lower portion of the electrode assembly 100 relatively adjacent to the bottom portion 25 of the accommodation space SV may have a larger area in contact with the adhesive layer 300, than the upper portion of the electrode assembly 100 relatively adjacent to the upper exterior material 202.

The adhesive layer 300 has low impregnability with respect to the electrolyte and may be made of or including a material having elasticity to absorb external shock.

The adhesive layer 300 may be made of or include a UV photocurable adhesive, and the adhesive strength may be strengthened by crosslinking when photocured with

UV. For example, the photocurable adhesive may be or include an acryl-based adhesive. **In** order for the viscosity of the adhesive to maintain the viscosity of generally about 740 cPs to about 780 cPs, which enables penetration into the surface protrusions and depressions of the separator located outermost of the electrode assembly, the adhesive may be applied at a nozzle temperature of about 75°C to about 85°C. For the application, a nozzle temperature of about 80°C, and a viscosity of about 760 cPs is preferred. After application, the adhesive may come into contact with a separator at room temperature of about 25°C, and as the temperature of the adhesive is lowered by the temperature of the separator, the viscosity of the adhesive increases. Afterwards, the adhesive hardens to a viscosity of about 15,000 cPS to about 38,000 cPs and maintains a fixed shape.

As such, when the adhesive layer 300 is formed and fixed between the electrode assembly 100 and the pouch 200, a fixing tape for fixing the protruding lower separator after folding may not be used, and thus defects due to falling off of the fixing tape may not occur.

In addition, when the adhesive layer 300 is formed as in an example embodiment, the disadvantage of deformation of the pouch during the formation process, or during the charge and discharge process, after inserting the electrode assembly 100 into the pouch, and the process of outgassing the pouch, may be reduced. That is, the adhesive layer 300 may reduce the interval between the electrode assembly 100 and the pouch 200, the pouch 200 is supported by the adhesive layer 300 so that the pouch 200 may be maintained in a constant shape. Therefore, even when a pressure is applied to the pouch due to the pressure difference between inner and outer portions of the pouch, or the like, the exterior shape of the pouch is prevented or hindered from being freely deformed.

**In** the above example embodiment, a rechargeable battery including a wound-type electrode assembly has been described, but is not limited thereto, and a rechargeable battery according to another example embodiment may include a stacked-type electrode assembly.

Hereinafter, the manufacturing method of a rechargeable battery shown in FIG. 1 will be described with reference to the drawings.

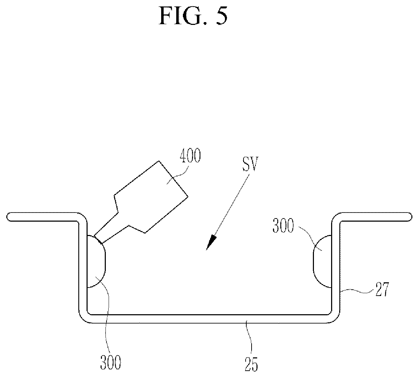

FIG. 4 is a drawing describing a method of folding the separator. FIG. 5 is a drawing describing a manufacturing method of a rechargeable battery according to an example embodiment.

As shown in FIG. 4, the electrode assembly 100 may be prepared, and the separator 13 may be folded.

The electrode assembly 100 may be or include the electrode assembly shown in FIG. 1, and may be or include an electrode assembly in a jelly roll shape formed by winding. The first electrode 11 and the separator 13 protruding from the second electrode 12 may be folded toward a center of the electrode assembly 100.

The separator 13 may be folded by using a separator jig 700, and the separator jig 700 may include a seated portion S where the electrode assembly 100 is seated. The seated portion S may have an edge formed in a curved surface, and may induce the direction of folding of the separator, such that the separator 13 may be readily bent toward the center of the electrode assembly 100 as the electrode assembly 100 is seated.

As needed, the separator jig 700 may be a heating device capable of temperature adjustment and installed with a heating wire (not shown), or the like.

The separator 13 may become flexible by heat and forming may be facilitated. Therefore, as the separator jig 700 is heated to above a predetermined or desired temperature to transfer heat to the separator 13, the separator 13 may readily bend inside the electrode assembly 100.

Accordingly, when the separator 13 is bent, the separator 13 overlaps to form a flat surface, thereby increasing the contact area with the adhesive layer and allowing the adhesive layer to be more strongly attached to the pouch.

Subsequently, the pouch 200 is prepared as shown in FIG. 5, and the adhesive is applied to the side wall 27 of the pouch 200, to form the adhesive layer 300. The nozzle 400 for applying the adhesive may be applied at an angle to the side wall 27 of the pouch 200.

The adhesive layer 300 may be made of or including a UV photocurable adhesive, and the adhesive strength may be strengthened by crosslinking when photocured with UV. For example, the photocurable adhesive may be an acryl-based adhesive. In order to maintain the viscosity of generally about 740 cPs to about 780 cPs, at which deformation is facilitated, the adhesive may be applied at a nozzle temperature of about 75°C to about 85°C. For example, the nozzle temperature is about 80°C, and the viscosity is about 760 cPs.

Thereafter, the electrode assembly 100 with the separator folded is placed in the accommodation space (SV) of the pouch 200. At this time, the electrode assembly 100 may be disposed in contact with the adhesive layer 300, and the adhesive layer 300 before curing has a low viscosity and may be pressed by the weight of the electrode assembly 100, and the applied of the adhesive layer 300 form may be deformed.

Again, as shown in FIG. 3, the adhesive layer 300 is pressurized by the electrode assembly 100, and may be deformed into the form partially surrounding the outer side of the electrode assembly 100 while moving along a gap between the pouch 200 and the electrode assembly 100. Therefore, the adhesive located in the lower portion of the electrode assembly 100 pressurized relatively strongly may spread more widely, such that the lower portion of the electrode assembly 100 can contact the adhesive layer 300 more widely than the upper portion.

That is, the adhesive layer 300 may be readily deformed due to the pressurization of the electrode assembly 100, and may be deformed according to the spatial form and size between the side wall 27 of the pouch 200 and the outer side of the electrode assembly 100, in order to fill the outer side of the electrode assembly 100.

The adhesive that has moved may contact the separator at room temperature (about 25°C), and as the temperature of the adhesive is lowered due to the temperature of the separator, the viscosity of the adhesive may increase. Thereafter, the adhesive may harden to a viscosity of about 15,000 cPs to about 38,000 cPs, and may maintain a fixed shape.

As such, the adhesive layer 300 may be deformed according to the size and shape of the gap, and may be in contact, e.g., in tight contact, with the outer side of the electrode assembly 100 and the inner wall of the pouch 200, in order to more firmly connect the outer side of the electrode assembly 100 and the inner wall of the pouch 200.

Thereafter, the adhesive layer 300 may be cured by irradiating UV, and may be covered with and sealed by the upper exterior material 202. The sealing is performed to form a gas outlet, such that gas generated during the formation process, or during the charge and discharge process, which is a subsequent process may be discharged, and then substantially completely sealed after injecting the electrolyte.

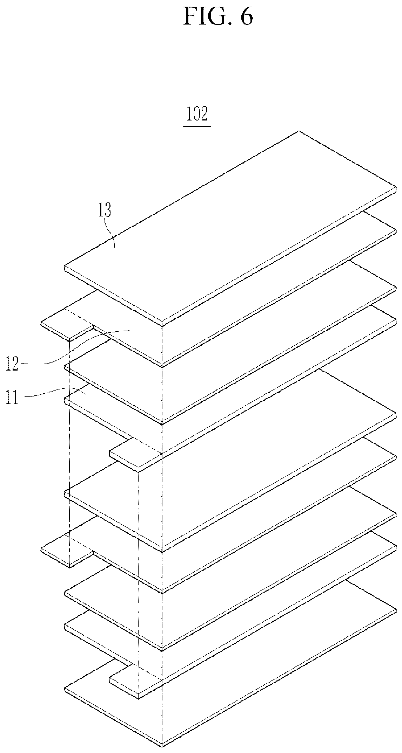

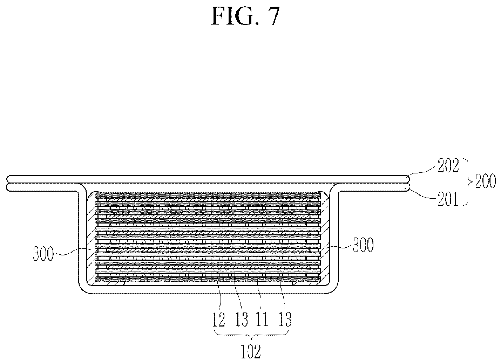

FIG. 6 is an exploded perspective view of an electrode assembly according to another example embodiment. FIG. 7 is a schematic cross-sectional view of a rechargeable battery including the electrode assembly of FIG. 6.

The rechargeable battery of FIG. 6 and FIG. 7 is substantially the same as the rechargeable battery of FIG. 1, and only differences will be described in detail.

As shown in FIG. 6 and FIG. 7, a rechargeable battery according to another example embodiment may include the pouch 200 and an electrode assembly 102 sealed within the pouch 200.

In the electrode assembly 102, the first electrode 11, the separator 13, and the second electrode 12 that are sheet-shaped are stacked, e.g., alternately stacked, repeatedly.

The adhesive layer 300 is formed on the inner wall of the pouch 200, and the electrode assembly 102 is attached to the adhesive layer 300 and fixed to the pouch 200.

The electrode assembly 102 is in the form of a sheet-shaped electrode that is repeatedly stacked, and may have a hexahedron structure, such that end portions of the first electrode 11, the separator 13 and the second electrode 12 may be exposed to the outside.

The separator 13 may be located between the first electrode 11 and the second electrode 12, and may protrude beyond the first electrode 11 and the second electrode 12. Therefore, due to the thicknesses of the first electrode 11 and the second electrode 12, a gap may be formed between the neighboring separator 13.

The adhesive layer 300 may be adhered and fixed to the inner wall of the pouch, and may be expanded into the gap between the separators 13 and the first and second electrodes 11, 12 expanded to fill the gap.

Hereinafter, the manufacturing method of a rechargeable battery shown in FIG. 7 will be described with reference to the drawings.

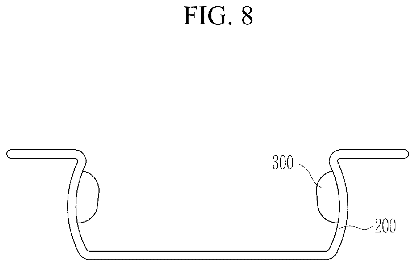

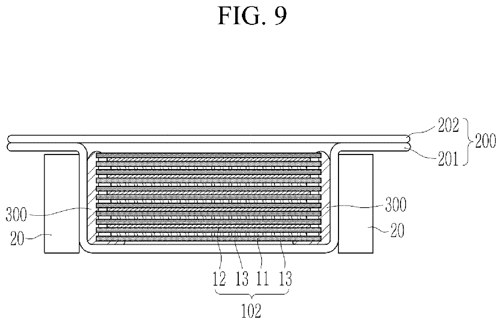

FIG. 8 and FIG. 9 are drawings describing another manufacturing method of a rechargeable battery according to an example embodiment.

As shown in FIG. 8, the adhesive layer 300 may be formed by applying the adhesive to the side wall 27 of the pouch 200. The adhesive may be applied at the nozzle temperature of about 75°C to about 85°C such that the form may be readily deformed.

Thereafter, as shown in FIG. 9, the electrode assembly 102 may be disposed within the pouch 200. Subsequently, the pouch 200 may be pressurized by a pressing plate 20. A temperature of the pressing plate 20 may be about 80°C.

While being pressurized, the exterior shape of the pouch 200 may be deformed to a flat shape according to the form of the pressing plate 20. By arranging the exterior shape of the pouch 200 to be a straight shape, the occurrence of empty space when disposing a plurality of cells into a limited space may be reduced.

In an example, due to the temperature of the pressing plate 20, the adhesive may maintain the viscosity of generally about 760 cPs, and may move into the gap between the separators 13.

The adhesive that has moved may contact the separator of the room temperature (about 25°C), and as the temperature of the adhesive is lowered due to the temperature of the separator, the viscosity of the adhesive may increase. Thereafter, the adhesive may harden to a viscosity of about 15,000 cPs to about 38,000 cPs, and may maintain a fixed shape.

As such, the form of the adhesive layer 300 may be deformed according to the size and shape of the gap, and may be in contact, e.g., in tight contact, with the outer side of the electrode assembly 100 and the inner wall of the pouch 200, to more firmly connect them.

Thereafter, the adhesive layer 300 may be cured by irradiating UV, and may be covered with and sealed by the upper exterior material 202. The sealing may be performed to form a gas outlet, such that gas generated during the formation process (or charge and discharge process), which is a subsequent process may be discharged, and then substantially completely sealed after injecting the electrolyte.

**<Description of symbols>**

| | | | |
|---|---|---|---|
| 11: | first electrode | 12: | second electrode |
| 13: | separator | 21, 23: | electrode tab |
| 100, 102: | electrode assembly | 200: | pouch |
| 300: | adhesive | 700: | separator jig |
| 1000: | rechargeable battery | | |

## Claims

1. A rechargeable battery (1000), comprising:
an electrode assembly (100, 102);
a pouch (200) configured to include the electrode assembly (100, 102) and an electrolyte therein; and
an adhesive layer (300) configured to connect the electrode assembly (102) to the pouch (200),
wherein the adhesive layer (300) is in contact with an inner surface of a side wall (27) of the pouch (200).

2. The rechargeable battery (1000) of claim 1, wherein the adhesive layer (300) surrounds an outer side of the electrode assembly (100, 102).

3. The rechargeable battery (1000) of claim 2, wherein the adhesive layer (300) is formed asymmetrically with respect to a virtual horizontal line that bisects a thickness of the electrode assembly (100, 102).

4. The rechargeable battery (1000) of any one of the preceding claims, wherein the adhesive layer (300) is deformed according to a shape of a gap between the side wall (27) of the pouch (200) and the electrode assembly (100, 102).

5. The rechargeable battery (1000) of claim 4, wherein the adhesive layer (300) substantially fills the gap.

6. The rechargeable battery (1000) of any one of the preceding claims, wherein the adhesive layer (300) comprises a photocurable adhesive.

7. The rechargeable battery (1000) of claim 6, wherein the photocurable adhesive comprises an acryl-based adhesive.

8. The rechargeable battery (1000) of any one of the preceding claims, wherein:
The electrode assembly (100, 102) comprises a wound-type electrode assembly (100, 102);
a separator (13) protrudes beyond from a first electrode (11) and a second electrode (12); and
the protruding separator (13) is folded toward a center of the electrode assembly (100, 102).

9. The rechargeable battery (1000) of claim 8, wherein the adhesive layer (300) connects the folded separator (13) of the electrode assembly (100, 102) to the pouch (200).

10. A manufacturing method of a rechargeable battery (1000), the method comprising:
preparing a pouch (200) and an electrode assembly (100, 102);
forming an adhesive layer (300) comprising a photocurable adhesive on an inner surface of a side wall (27) of the pouch (200);
disposing the electrode assembly (100, 102) to contact the adhesive layer (300);
curing the adhesive layer (300) with ultraviolet light; and
sealing the pouch (200).

11. The manufacturing method of claim 10, wherein forming the adhesive layer (300) comprises applying the adhesive layer (300) at a viscosity of 740 cPs to 780 cPs at a nozzle temperature of 75°C to 85°C.

12. The manufacturing method of claim 11, wherein disposing the electrode assembly (100, 102) comprises deforming the adhesive layer (300) according to a gap between the electrode assembly (100, 102) and the side wall (27) of the pouch (200).

13. The manufacturing method of claim 12, wherein:
deforming the adhesive layer (300) comprises pressurizing the adhesive layer (300) by a weight of the electrode assembly (100, 102).

14. The manufacturing method of claim 13, further comprising, after disposing the electrode assembly (100, 102), forming an exterior shape of the pouch (200) by pressurizing the pouch (200) by a pressing plate (20).

15. The manufacturing method of claim 14, wherein the pressing plate (20) pressurizes the pouch (200) at a temperature of about 80°C.
